# EUROPEAN PATENT APPLICATION

(11) **EP 4 089 300 A1**
(43) Date of publication of application: **16.11.2022**
(21) Application number: 21173020.5
(22) Date of filing: 10.05.2021
(51) Int. Cl.: F16F 9/06, F16F 9/46, F16F 9/342, E05F 5/10, E05F 3/20, E05F 5/02

(54) **HYDRAULIC DAMPING DEVICE, HINGE ARRANGEMENT, AND MACHINE**

(71) Applicant: Sandvik Mining and Construction Oy, 33330 Tampere (FI)
(72) Inventor: MIKKOLA, Mr. Jussi, 33330 Tampere (FI); LAHTINEN, Mr. Teppo, 33330 Tampere (FI)
(74) Representative: Sandvik

(57) **Abstract**

A hydraulic damping device comprising a housing (2) having a cylinder space (3) defined by a cylindrical inner wall (4) of the housing, a piston (7) arranged movably in the cylinder space (3), a piston rod (8) arranged to the piston (7) and extending to the outside of the housing (2), means for moving the piston (7) from a first position, in which the piston rod (8) is in a retracted position, to the second position, in which the piston rod (8) is in an extended position, and a fluid tank (20) operationally connected via fluid channel (19) to the cylinder space (3). The damping device (1) is configured to damp a movement of the piston (7) and the piston rod (8) from the extended position of the piston rod (8) to the retracted position of the piston rod (8) achieved by an external force directed to the piston rod (8), wherein a fluid flow is achieved by pressing the fluid with the piston (7) from the cylinder space (3) to the fluid tank (20) via the fluid channel (19), and the device comprises means for returning the piston (7) to the extended position of the piston rod (8) when the external force is not directed to the piston rod. The invention relates also to a hinge arrangement and a machine.

## Description

### FIELD OF THE INVENTION

The invention relates to a hydraulic damping device. The invention relates also to a hinge arrangement provided with the hydraulic damping device. Further, the invention relates also to a machine provided with the hinge arrangement.

### BACKGROUND OF THE INVENTION

Different kind of machines may comprise various hatches, hoods or doors that may be rather heavy and therefore an uncontrollable closure of the hatches, hoods or doors may lead to hazardous situations or even injuries.

Various devices have been introduced in connection with the hatches, hoods, or doors for avoiding uncontrollable closing of them. However, these are often intended only for lighter use or they need extra space or are exposed to damages.

Hydraulic damping devices of different types are frequently used, for instance in vehicles, in order to influence the mutual movements between different components. However, these may be intended for a rather light use and their assembly may be rather complicated.

### OBJECTIVE OF THE INVENTION

The objective of the invention is to alleviate the disadvantages mentioned above.

### SUMMARY

According to a first aspect, the present invention provides a hydraulic damping device comprising a housing having a cylinder space defined by a cylindrical inner wall of the housing, a piston arranged movably in the cylinder space, a piston rod arranged to the piston and extending to the outside of the housing, means for moving the piston from a first position, in which the piston rod is in a retracted position, to the second position, in which the piston rod is in an extended position, and a fluid tank operationally connected via fluid channel to the cylinder space.

According to the invention the damping device is configured to dampen a movement of the piston and the piston rod from the extended position of the piston rod to the retracted position of the piston rod achieved by an external force directed to the piston rod, wherein a fluid flow is achieved by pressing with the piston the fluid from the cylinder space to the fluid tank via the fluid channel, and the device comprises means for returning the piston to the extended position of the piston rod when the external force is not directed to the piston rod.

According to a second aspect the present invention provides a hinge arrangement comprising a first hinge part, a second hinge part, a hinge axis, wherein the first and/or second hinge part are arranged to rotate relative to each other around the hinge axis. The hydraulic damping device, according to any one of embodiments mentioned below or above alone or in combination of other embodiment, may be arranged in the hinge arrangement. The first hinge part or the second hinge part or a contacting part may be arranged to contact and press the piston rod. In an embodiment a contacting part may be arranged to the first hinge part or to the second hinge part. In an embodiment the first hinge part or the second hinge part or the contacting part may be arranged to contact and press the piston rod of the hydraulic damping device at least in a portion of an angle of rotation of the hinge parts about the hinge axis.

According to a third aspect the present invention provides a machine comprising a hatch or a hood or a door. The hatch or the hood or the door may be connected to a support surface of the machine with a hinge arrangement according to any one of embodiments mentioned below or above alone or combined with other embodiment.

The technical effect is that by damping devices may be used in relation to different kind of hatches or hoods or doors to absorb an impact of uncontrollable closing of the hatch or the hood or the door and therefore avoiding objects to catch the closing hatch or hood or door and an edge of the opening the hatch or hood or door is intended to cover. The damping device may be a safety device arranged to vehicles or machinery with hatches or hoods or doors. The further technical effect is that the hinge arrangement may comprise the damping device and therefore they form a compact combination of the hinge and the damping device.

The dumping device, the hinge arrangement and the machine are characterized by what is stated in the independent claims.

Some other embodiments are characterized by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an embodiment of the hydraulic damping device the piston may be arranged to divide the cylinder space to a first chamber on a first side of the piston and to a second chamber on a second side of the piston. The first chamber and the second chamber may be connected with each other via first and second flow channels arranged in the piston. A valve may be arranged to the piston, said valve may be arranged to allow flow of fluid via first flow channels in a first direction of flow and to keep the first flow channels closed in a second direction of flow, the first direction of flow being when the piston is moved from a first position in which position the piston rod is in the retracted position to a second position in which position the piston rod is in the extended position, and the second direction of flow being when the piston is moved from the second position, in which second position the piston rod is in the extended position, to the first position, in which first position the piston rod is in the retracted position.

In an embodiment of the hydraulic damping device an adjusting device may be arranged for adjusting of the damping effect by adjusting of flow rate of the fluid. In an embodiment the adjusting device may be arranged for adjusting of the damping effect by adjusting of flow rate of the fluid via the second channel between the first chamber space and the second chamber space. In an embodiment the damping effect may be adjusted by adjusting an intake or an output of replacement air via a vent arranged to the damping device. An advantage for embodiments is that the damping device with an adjusting device may be easily adapted to be utilized with various different embodiments.

In an embodiment of the hydraulic damping device the adjusting device may comprise a tapered pin arranged or formed on a spindle arranged in a boring of the piston rod. In an embodiment the spindle may be arranged in a boring arranged in a longitudinal axis of the piston rod and extending to the second flow channel. In an embodiment a threading may be arranged on an inner surface of the boring for the spindle and a counter threading may be arranged on the spindle. An advantage for these embodiments is that the adjusting device may be easy to set up for different embodiments by turning the spindle by a tool, such as by a screwdriver, for example from a slot arranged on an end of the spindle.

In an embodiment of the hydraulic damping device means for returning the piston to the extended position of piston rod may comprise a spring. In an embodiment the spring may be arranged to the cylinder space between the piston and an end of the cylinder space. An advantage is that a spring is a simple and reliable solution for the returning means of the piston and the piston rod.

In an embodiment of the hydraulic damping device the fluid tank may comprise pressure means. An advantage for this embodiment is that by it is a sufficient way to keep the fluid pressure in the damping device high enough to move the piston and the piston rod of the damping device to the extended position of the piston rod.

In an embodiment of the hydraulic damping device the fluid tank may comprise a cylinder space and a second piston arranged movably in the cylinder space and a spring arranged to press the piston towards the fluid channel part of the cylinder space. In an embodiment a spring may be arranged to the fluid tank for pressing the piston of the fluid tank and keeping the fluid pressure in the damping device high enough to move the piston and the piston rod of the damping device to the extended position of the piston rod.

In an embodiment of the hydraulic damping device the fluid tank is arranged in the housing. An advantage for arranging the fluid tank in the housing is that a compact structure for the combination of the damping device and the fluid tank may be achieved. In an embodiment of the hydraulic damping device the hydraulic damping device may comprise a plurality of fluid tanks. In an embodiment the housing may be comprise a plurality of fluid tanks arranged in the one housing of the damping device. An advantage is that the housing may be made to form a block that comprises space for the piston, the piston rod and the fluid tanks and the fluid channels. The damping device may form a compact module that is easy to connect with a hinge arrangement and/or a support structure. The damping device may also be formed as strong and for heavy duty uses, such as for use with mine machines.

In an embodiment of the hydraulic damping device the housing may comprise a fixing point to a hinge part. In an embodiment of the hydraulic damping device the housing the fixing point is a threaded hole. An advantage for arranging a fixing point in the damping device for the hinge part is that it may be help for connecting the damping device and the hinge to a support structure.

In an embodiment of the hinge arrangement the hinge arrangement is arranged to connect a hatch or a hood or a door to a machine or a vehicle. In an embodiment the hinge arrangement may be connected to a mining machine.

In an embodiment of the hinge arrangement the damping device and the first hinge part or the second hinge part may be arranged to common fixing points.

In an embodiment of the machine the hatch or the hood is connected to the structures of the machine with a hinge arrangement according to any one of the embodiments mentioned above alone or in combination with other embodiment.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic representation of a side view of a cross section of an embodiment of a damping device, a piston in an extended position,
**Figure 2** is a schematic representation of a side view of a cross section of an embodiment of a damping device, a piston in a retracted position,
**Figure 3** is a schematic representation of a cross section of line A-A of figure 4 of an embodiment of a damping device,
**Figure 4** is a schematic representation of an embodiment a damping device from direction of arrow B of Figure 3,
**Figure 5** is a schematic representation of an embodiment of a hinge arrangement with a damping device,
**Figure 6** is a schematic representation of an embodiment of a machine utilizing an embodiment of a hinge arrangement with a hatch, the hatch in an opened position,

In the figures, some embodiments are shown simplified for the sake of clarity. Similar parts are marked with the same reference numbers in the figures.

### DETAILED DESCRIPTION

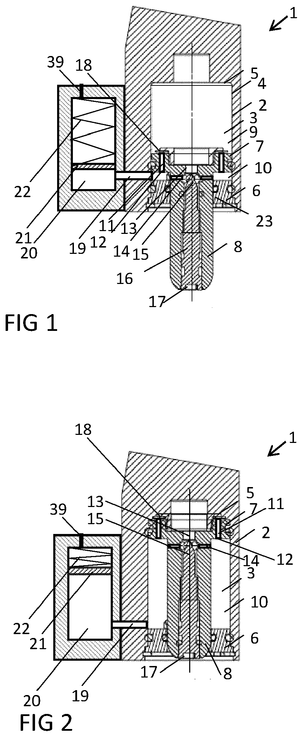

In figures 1 and 2 is schematically and simplified illustrated an embodiment of a hydraulic damping device 1. In an embodiment of a hydraulic damping device 1 may comprise a housing 2. The housing may comprise a cylinder space 3. The cylinder space may be defined by an inner wall 4 of the housing 2. In an embodiment the inner wall 4 may be cylindrical wall. The cylinder space 3 may have a first end wall 5 and a second end 6. In an embodiment the second end 6 may be a disc like piece connected to the housing 2, for example on a shoulder arranged on an edge of an opening of the housing 2. A piston 7 may be arranged movably in an axial direction of the cylinder space 3. The piston 7 may be arranged slidably against the inner wall 4. In an embodiment a piston rod 8 may be arranged to the piston 7. In an embodiment the piston rod may be extending to the outside of the housing 2. In the second end 6 of the cylinder space may comprise an opening 23 for the piston rod 8. The piston rod is slidably and sealingly mounted to the second end of the cylinder space, wherein the piston rod extends through an opening 23 of the second end. On or more sealing members may be mounted to a wall of the opening 23 in form a fluid tight seal between the second end 6 and the surface of the piston rod.

In an embodiment the dumping device 1 may further comprise means for moving the piston 7 from a first position, in which the piston rod 8 is in a retracted position (figure 2), to the second position, in which the piston rod 8 is in an extended position (figure 1).

In an embodiment of the dumping device a fluid tank 20 may be operationally connected via fluid channel 19 to the cylinder space 3.

In an embodiment the damping device 1 may be configured to dampen a movement of the piston 7 and the piston rod 8 from the extended position of the piston rod 8 to the retracted position of the piston rod 8 achieved by an external force directed to the piston rod 8. In an embodiment a fluid flow may be achieved by pressing with the piston 7 the fluid from the cylinder space 3 to the fluid tank 20 via the fluid channel 19. In an embodiment a throttle of an orifice of the flow channel may provide the damping effect with help of the flow of the fluid from the cylinder chamber to the fluid tank.

In an embodiment the damping device may comprise means for returning the piston 7 to the extended position of the piston rod 8 when the external force is not directed to the piston rod. In an embodiment means for returning the piston may comprise a spring member arranged between the piston 7 and the first end wall 5 of the cylinder space 3. In an embodiment the spring member may be a coil spring. In an embodiment the returning means may comprise other arrangements as presented in some of the embodiments below.

In an embodiment the piston 7 may be arranged to divide the cylinder space 3 to a first chamber 9 on a first side of the piston 7 and to a second chamber 10 on a second side of the piston. The first chamber 9 and the second chamber 10 may be connected with each other via first flow channels 11 arranged in the piston 7. In an embodiment the first flow channels may be arranged on a longitudinal direction of the piston. In an embodiment the first flow channels 11 may be arranged divided on a circle at a distance in a radial direction from the piston rod 8. In an embodiment a valve 18 may be arranged to the piston. The valve 18 may be arranged to allow flow of fluid via first flow channels 11 in a first direction of flow and to keep the first flow channels 11 closed in a second direction of flow. In an embodiment the valve 18 may be an annular disc. In an embodiment the annular disc forming the valve 18 may be arranged to move or bend so that the fluid may flow in the first direction of flow but keep the first fluid channels 11 closed in a second direction of flow. The first direction of flow being when the piston is moved from a first position in which position the piston rod is in the retracted position to a second position in which position the piston rod is in the extended position, and the second direction of flow being when the piston is moved from the second position, in which second position the piston rod is in the extended position, to the first position, in which first position the piston rod is in the retracted position. In an embodiment second flow channels 13, 14 may be arranged in the piston 7 to connect the first chamber 9 and the second chamber 10 with each. In an embodiment second flow channels may comprise a longitudinal flow channel 12 and radial flow channels 14. In an embodiment the radial flow channels may be arranged divided on a from the longitudinal channel to the cylindrical surface of the piston rod 8. A plurality of radial channels 14 may be ranged to form a through holes from the first chamber space 9 via the longitudinal channel 13 to the second chamber part of the cylinder space 3.

In an embodiment of the damping device an adjusting device 15 may be arranged for adjusting of the damping effect by adjusting of flow rate of the fluid. In an embodiment adjusting device may be arranged to adjusting intake/output of replacement air via a vent 39 arranged to the damping device. In an embodiment the damping efficiency may be adjusted by the viscosity of the fluid. In an embodiment the damping efficiency may be improved by using a hydraulic fluid with a higher viscosity, and vice versa, the damping efficiency may be reduced by using a hydraulic fluid with a lower viscosity in the damping device. In an embodiment the damping efficiency may be adjusted with characteristics of a spring, such as spring rate, suitable for returning the piston from retracted position of the piston rod to the extended position of the piston rod 8.

In an embodiment of the damping device the adjusting device 15 may be arranged for adjusting of the damping effect by adjusting of flow rate of the fluid via the second channel 13, 14 between the first chamber space 9 and the second chamber space 10.

In an embodiment the adjusting device 15 may comprise a tapered pin arranged or formed on a spindle 16 arranged in a boring arranged in a longitudinal axis of the piston rod 8 and extending to the second flow channel 13, 14 of the piston.

In an embodiment the means for returning the piston 7 to the extended position of piston rod 8 may comprise a spring.

In an embodiment of the hydraulic damping device the fluid tank 20 may comprise pressure means. The pressure means may be arranged to keep the fluid pressure at a suitable level in order to affect the damping effect and possibly also to achieve the returning of the piston from the first position to the second position (i.e. the extended position of the piston rod). By arranging pressure means to the fluid tank it may be possible to maintain fluid pressure high enough also in situations in which a position of the damping device is disadvantageous for its operation.

In an embodiment the fluid tank 20 may comprise a cylinder space and a second piston 21 arranged movably in the cylinder space and a spring 22 arranged to press the piston towards the fluid channel 19 part of the cylinder space. In an embodiment an opening of the fluid channel 19 may be arranged on a portion of the fluid tank between piston and the end of the fluid tank. In an embodiment the opening of the fluid channel 19 may be made on a side wall of the fluid tank 20. In an embodiment of the damping device a vent 39 may be arranged to an opposite portion of the fluid tank in relation to fluid channel opening 19. In an embodiment adjusting device may be arranged to adjusting intake/output of replacement air via the vent 39 arranged to the damping device.

In an embodiment of the damping device the fluid tank 20 may be arranged in the housing 2. In an embodiment the hydraulic damping device may comprise a plurality of fluid tanks 20. In the embodiment of the figure the damping device may comprise two fluid tanks 20. This makes it possible to keep a fluid pressure at a suitable level and equally distributed. Redundant fluid tanks may also reduce possibilities of malfunction of the damping device. In an embodiment the fluid tank or fluid tanks or a reserve fluid tank may be arranged to be operationally connected to the damping device via a pipe or a hose. In an embodiment the fluid tank or fluid tanks may be arranged to be operationally connected to the cylinder space of the damping device via a pipe or a hose. In an embodiment the fluid tank or the fluid tanks or the reserve fluid tank may be arranged as a separate unit or separate units in relation to the housing 2 of the damping device 1.

In an embodiment the housing 20 may comprise a fixing point to a hinge part and/or the support structure. In an embodiment the fixing point may be a threaded hole. In an embodiment the threaded hole is arranged on a housing on a surface of an opposite end of the housing in relation to the piston rod.

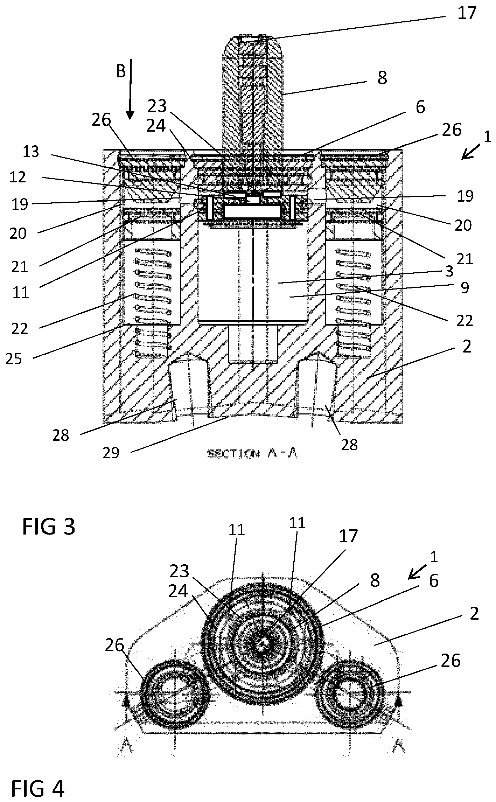

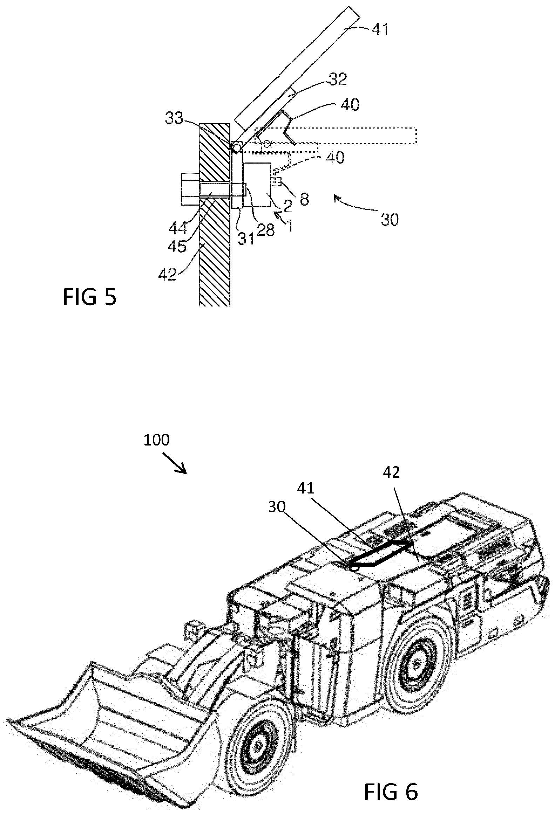

In an embodiment a hinge arrangement 30 may comprise a first hinge part 31, a second hinge part 32, a hinge axis 33, wherein the first hinge part and/or second hinge part are arranged to rotate relative to each other around the hinge axis 33. The hydraulic damping device 1 according to any one of embodiment mentioned above or below alone or in a combination with other embodiments may be arranged in the hinge arrangement. The first hinge part 31 or the second hinge part 32 or a contacting part 40 may be arranged to contact and press the piston rod 8 at least in a portion of an angle alpha α of rotation of the hinge parts about the hinge axis. A form and shape of the contacting part 40 may be configured to according to the embodiment to contact the end of the piston rod 8 when the hinge i.e. the first hinge part and/or the second hinge part is moved around the hinge axis (from open state to a closed state). The closed state is presented in figure 4 with a dotted line. In an embodiment the hatch 41 or the hood or the door connected to the support surface 42 via the hinge arrangement may be arranged to contact the piston rod 18 of the damping device 1. As it can be seen from figure 5 the dotted line of the contacting part 40 may have pressed the piston rod 8 in a closed position of the hatch 41 and the damping device 1 may have dampened the closing of the hatch 41 at least in an end portion of the closing movement of the hatch 41. In an embodiment the contacting part 40 may be arranged to one of the hinge parts 31, 32. In an embodiment the contacting part 40 may be arranged to the other hinge part than which the housing 2 of the damping device 1 is fixed with.

In an embodiment the hinge arrangement 30 may be arranged to a hatch 41 or a hood or a door of a machine 100 or a vehicle.

In an embodiment the machine 100 may be a mine machine or a construction machine e.g. a rock drilling rig, a development drill, a tunneling drilling machine, a surface drilling machine, a bolting or reinforcing vehicle, a rock removal machine, a long hole drill rig, an explosive charging machine, a loader, a transport vehicle, a loading machine, or hauling machine, setting vehicle of gallery arcs or nets, a concrete spraying machine, a crusher, a measuring vehicle, or a passenger transport vehicle. In figure 6 the machine 100 may be a loading or a hauling machine. In the mine machines there may be rather heavy hatches or hoods, whereby it is advisable in view of safety aspects to use a hinge arrangement 30 with a damping device 1 with the hatches 41 or hoods.

In an embodiment of the hinge arrangement the damping device 1 and the first hinge part 31 or the second hinge part 32 may be arranged to common fixing points 28. In an embodiment the common fixing point 28 may be a threaded hole. In an embodiment the threaded hole may be arranged on a housing 2 of the damping device 1. In an embodiment the fixing point 28 may be arranged on the wall of the housing. In an embodiment the fixing point may be arranged to an end 29 of the housing, opposite to the end of the housing the piston rod 8 is configured to extend.

In an embodiment the machine 100 may comprise a hatch 41 or a hood or a door. In an embodiment the hatch 41 or the hood or door may be connected to a support surface 42 of structures of the machine by the embodiment of the hinge arrangement 30 mentioned above or in a combination with other embodiments mentioned above. In an embodiment a through hole 45 may be arranged through a structure of a support surface 42. A fixing member 44, such as a screw of bolt, may be arranged to extend from a first side of the support surface 42 to the second side of the support surface and through an opening arranged to the first hinge part 31 so that the end extending through the support surface 42 and the first hinge part 31 may be positioned to the fixing point 28 of the housing 2 of the damping device 1. A compact hinge arrangement comprising a hinge and a damping device may be easily fixed to the structures of a machine and to a hatch 41.

It is obvious to a person skilled in the art that with the advancement of technology, the basic idea of the invention may be implemented in various ways. The invention and its embodiments are thus not limited to the examples described above, instead they may vary within the scope of the claims.

### Reference symbols

- 1: Damping device
- 2: Housing
- 3: Cylinder space
- 4: Cylindrical inner wall
- 5: First end wall
- 6: Second end
- 7: Piston
- 8: Piston rod
- 9: First chamber
- 10: Second chamber
- 11: First flow channel
- 12: Flow channel opening
- 13: Second flow channel
- 14: Third flow channel
- 15: Flow adjusting member
- 16: Spindle
- 17: Slot
- 18: Check valve (non-return valve)
- 19: Fluid channel
- 20: Fluid tank
- 21: Second piston
- 22: Spring member
- 23: Opening
- 24: Retaining ring
- 25: Fluid tank first end
- 26: Fluid tank wall
- 27: Fluid tank second end
- 28: Fixing point
- 29: Wall of the housing
- 30: Hinge arrangement
- 31: First hinge part
- 32: Second hinge part
- 33: Hinge axis
- 39: Vent
- 40: Contacting part
- 41: Hatch or hood
- 42: Support surface
- 44: Fixing member
- 45: Through hole

- 100: Machine

## Claims

1. A hydraulic damping device comprising a housing (2) having a cylinder space (3) defined by a cylindrical inner wall (4) of the housing, a piston (7) arranged movably in the cylinder space (3), a piston rod (8) arranged to the piston (7) and extending to the outside of the housing (2), means for moving the piston (7) from a first position, in which the piston rod (8) is in a retracted position, to the second position, in which the piston rod (8) is in an extended position, and a fluid tank (20) operationally connected via fluid channel (19) to the cylinder space (3), wherein the damping device is configured to damp a movement of the piston (7) and the piston rod (8) from the extended position of the piston rod (8) to the retracted position of the piston rod (8) achieved by an external force directed to the piston rod (8), wherein a fluid flow is achieved by pressing the fluid with the piston (7) from the cylinder space (3) to the fluid tank (20) via the fluid channel (19), and the device comprises means for returning the piston (7) to the extended position of the piston rod (8) when the external force is not directed to the piston rod.

2. The hydraulic damping device according to claim 1, wherein the piston (7) is arranged to divide the cylinder space (3) to a first chamber (9) on a first side of the piston (7) and to a second chamber (10) on a second side of the piston, wherein the first chamber and the second chamber are connected with each other via first flow channels (11) and second flow channels (13, 14) arranged in the piston (7), wherein a valve (18) is arranged to the piston, said valve is arranged to allow flow of fluid via first flow channels (11) in a first direction of flow and to keep the first flow channels (11) closed in a second direction of flow, the first direction of flow being when the piston (7) is moved from a first position in which position the piston rod (8) is in the retracted position to a second position in which position the piston rod (8) is in the extended position, and the second direction of flow being when the piston (7) is moved from the second position, in which second position the piston rod (8) is in the extended position, to the first position, in which first position the piston rod (8)is in the retracted position.

3. The hydraulic damping device according to claim 1 or 2, wherein an adjusting device (15) is arranged for adjusting of the damping effect by adjusting of flow rate of the fluid.

4. The hydraulic damping device according to any one of claims 1 to 3, the adjusting device (15) is arranged for adjusting of the damping effect by adjusting of flow rate of the fluid via the second channel (13, 14) between the first chamber space and the second chamber space.

5. The hydraulic damping device according to any one of claims 1 to 4, wherein the adjusting device (15) comprises a tapered pin arranged or formed on a spindle (16) arranged in a boring arranged in axis of the piston rod (8) and extending to the second flow channel (13, 14).

6. The hydraulic damping device according to any one of claims 1 to 5, wherein means for returning the piston (7) to the extended position of piston rod (8) comprises a spring.

7. The hydraulic damping device according to any one of claims 1 to 6, wherein the fluid tank (20) comprises pressure means.

8. The hydraulic damping device according to any one of claims 1 to 7, wherein the fluid tank (20) comprises a cylinder space and a second piston (21) arranged movably in the cylinder space and a spring (22) arranged to press the second piston (21) towards the fluid channel (19) part of the cylinder space.

9. The hydraulic damping device according to any one of claims 1 to 8, wherein the hydraulic damping device (1) comprises a plurality of fluid tanks (20) .

10. The hydraulic damping device according to any one of claims 1 to 9, wherein the housing (20) comprises a fixing point (28) for connecting the damping device (1) to a support surface and/or to a hinge part.

11. The hydraulic damping device according to claim 10, wherein the fixing point (28) is a threaded hole.

12. A hinge arrangement (30) comprising a first hinge part (31), a second hinge part (32), a hinge axis (33), wherein the first hinge part and/or second hinge part are arranged to rotate relative to each other around the hinge axis (33), wherein the hydraulic damping device (1) according to any one of claims 1 to 11 is arranged in the hinge arrangement, and wherein the first hinge part (31) or the second hinge part (32) or a contacting part (40) is arranged to contact and press the piston rod (8) at least in a portion of an angle of rotation of the hinge parts about the hinge axis.

13. The hinge arrangement according to claim 14, wherein the hinge arrangement (30) is arranged to connect a hatch (41) or a hood or a door to a support surface (42) of a machine (100) or a vehicle.

14. The hinge arrangement according to claim 12 or 13, wherein the damping device (1) and the first hinge part (31) or the second hinge part (32) are arranged to common fixing points (28) so that the first hinge part (31) or the second hinge part (32) is arranged between the support surface (42) and housing (2) of the damping device (1).

15. A machine (100) comprising a hatch (41) or a hood or a door, wherein the hatch (41) or the hood or the door is connected to a support surface (42) of the machine with a hinge arrangement (30) according to any one of claims 12 to 14.
